(19) Europäisches Patentamt

European Patent Office

Office européen des brevets

(11) EP 1 408 494 A2

(12) **EUROPEAN PATENT APPLICATION**

(43) Date of publication:
14.04.2004 Bulletin 2004/16

(51) Int Cl.⁷: $G11B\ 11/105$

(21) Application number: 03256327.2

(22) Date of filing: 08.10.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 09.10.2002 JP 2002296322

(71) Applicant: **CANON KABUSHIKI KAISHA**
**Tokyo (JP)**

(72) Inventor: **Sumioka, Jun, Canon Kabushiki Kaisha**
**Tokyo (JP)**

(74) Representative:
**Beresford, Keith Denis Lewis et al**
**BERESFORD & Co.**
**16 High Holborn**
**London WC1V 6BX (GB)**

(54) **Annealed domain-wall-displacement type magneto-optical recording medium and method of producing same**

(57) There are provided a magneto-optical recording medium in which domain-wall-displacement without affection by a wobbling shape is performed stably in a recording track region and which enables recording and reproduction of an information to be performed in a stable manner, and a method of producing the magneto-optical recording medium. The domain-wall-displacement type magneto-optical recording medium comprises a substrate having formed therein a groove and a land at least either of which is used as a recording track for an information, the recording track being wobbled to indicate an address information; a magnetic layer formed on the substrate; and an annealed region formed by annealing the magnetic layer between the recording tracks, wherein the annealed region is formed linearly along the wobbled recording track.

MAGNETO-OPTICAL RECORDING MEDIUM

FIG. 5A

GROOVE PORTION (RECORDING TRACK)

LAND PORTION

FIG. 5B

GROOVE PORTION (RECORDING TRACK)

ANNEALED REGION

ANNEALED REGION

LAND PORTION

## Description

The present invention relates to a domain-wall-displacement type magneto-optical recording medium which records an information by forming a recording magnetic domain on a magnetic film, expanding the above-described formed recording magnetic domain, and reproducing the information by use of the magneto-optical effect and a method of producing the domain-wall-displacement type magneto-optical recording medium.

Recent years have seen growing requirements for higher recording density design of magneto-optical recording mediums and in order to meet the requirements, there have been developed techniques for reproducing very fine recording marks which surpass the optical resolving power in the wavelength of light and reproducing optical systems used in reproduction. For example, a magnetic superresolution reproduction method is known as a method that realizes the above by contriving recording mediums.

In this method, recording marks are transferred only to detection regions narrower than the spot diameter of a reproduction laser in a magnetic multilayer film and masking is performed magnetically in a single direction in other regions. Therefore, signal detection regions are substantially limited and reproduction surpassing the optical resolving power becomes possible. However, when the reproduction dissolving power is to be improved in the magnetic superresolution reproduction method, it is necessary to narrow the signal detection regions capable of being effectively used and, therefore, there is occurred the defect that the amplitude itself of a reproduction signal decreases.

In order to resolve the above-described problem, there has been proposed a method that involves, instead of narrowing signal detection regions, enlarging and reproducing recording marks, for example, in Japanese Patent Application Laid-Open No. 6-290496. The official gazette describes a domain-wall-displacement detection system which involves irradiating a magneto-optical medium formed of a plurality of magnetic layers with a light spot, transferring a magnetic domain recorded as vertical magnetization to a reproduction layer, and displacing the domain wall of the magnetic domain transferred to the reproduction layer thereby making it greater than the magnetic domain of the recording layer to effect reproduction.

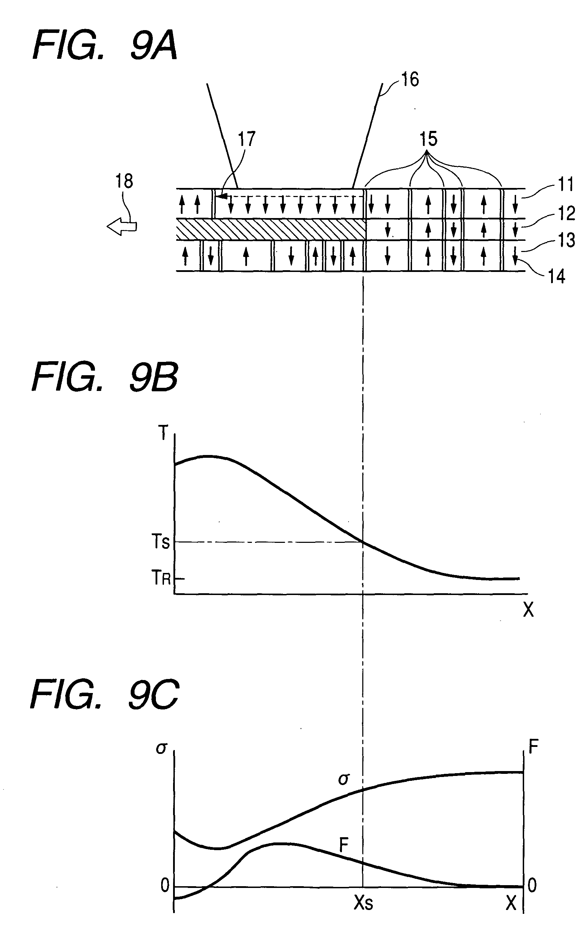

Next, this domain-wall-displacement detection system will be described below. FIGS. 9A, 9B and 9C are schematic views to explain a magneto-optical recording medium used in the domain-wall-displacement detection system and a reproduction method thereof. Specifically, FIG. 9A is a schematic sectional view of an example of a domain-wall-displacement magneto-optical recording medium. Further, FIG. 9B is a graph showing a temperature distribution (i.e., relation between position X and temperature T of medium) formed on the above magneto-optical recording medium. In the figure, $T_R$ represents room temperature. Moreover, FIG. 9C is a graph showing the distribution of a domain-wall energy density of the first magnetic layer 11 corresponding to the temperature distribution of FIG. 9B. In the figure, the lefthand ordinate indicates domain-wall energy density σ, the right-hand ordinate indicates forth F acting on domain wall, and the abscissa indicates position X.

First, in this example, as shown in FIG. 9A, a magneto-optical recording medium is formed of an exchangeably coupled 3-layer film which is constituted by a first magnetic layer 11 which has a relatively small domain-wall coercive force compared to the other magnetic layers, a second magnetic layer 12 which has a relatively low Curie temperature Ts, and a third magnetic layer 13 which has a large domain-wall coercive force. An arrow 14 in each layer indicates the direction of atomic spin. A domain wall 15 is formed at a boundary portion between regions whose spin directions are opposite to each other.

When local heating is performed by scanning a recording film surface with a reproducing laser beam 16, a temperature distribution is formed as shown in FIG. 9B, and in association with this, a distribution of domain-wall energy density is formed as shown in FIG. 9C. In general, the higher the temperature, the lower the domain-wall energy density. Therefore, the distribution is such that the domain-wall energy density is lowest at a position of a peak temperature. As a result, a domain-wall driving force F which displaces the domain wall of the first magnetic layer 11 existing at a position X to a high temperature side where the energy density is low.

In a place where the medium temperature is lower than the Curie temperature Ts of the second magnetic layer, the magnetic layers exchangeably couple with each other, so that even when the domain-wall driving force due to the above-described temperature gradient acts, domain-wall-displacement does not occur by blocking with the large domain-wall coercive force of the third magnetic layer 13. However, in a place where the medium temperature is higher than Ts, the exchangeable coupling between the first magnetic layer 11 and the third magnetic layer 13 is severed, so that a domain wall in a moving layer with a small domain-wall coercive force becomes displaceable with the domain-wall driving force due to the temperature gradient. For this reason, when the domain wall passes over the position of the temperature Ts in association with the scanning of the medium and enters the coupling-severing region, the domain-wall-displacement to the high temperature side instantaneously occurs within the moving layer.

Each time domain walls formed at intervals corresponding to signals in a recording film pass over the position of the temperature Ts in association with the scanning of the medium, domain-wall-displacement occurs within the moving layer. It follows that when the medium is scanned at a constant speed, this domain-wall-displacement occurs at time intervals corresponding to the spatial intervals of recorded domain walls. Therefore, detecting the occurrence of domain-wall-displacement can reproduce recording signals. The occurrence of domain-wall-displacement can be detected by use of a reproducing laser beam utilizing the rotation of the plane of polarization (Kerr effect) that depends on the direction of magnetization in a domain-wall-displacement region.

The amplitude of a signal is determined by the domain-wall-displacement distance and does not depend on the distance between recorded domain walls, i.e., the magnetic domain length. Furthermore, because record patterns are discriminated by isothermal lines of the temperature Ts, and not by reproduction spots, signals can be reproduced regardless of the dissolving power of optical systems.

When good reproduction signals with less noise are to be obtained in a magneto-optical recording medium using the above-described conventional domain-wall-displacement detection system, it is necessary to break the magnetic bond of magnetic layers between adjacent information tracks. The reason may be considered that in a case where the magnetic films between information tracks are continuous and uniform physically and in terms of physical properties, a recording mark exists as a magnetic domain that is surrounded by a closed domain wall, so that when domain-wall-displacement is to be effected in a direction in which this recording mark is enlarged, the domain wall area is inevitably enlarged to increase the energy of the domain wall, with the result that the action of domain-wall-displacement becomes unstable.

To break the magnetic bond, three methods are described in the above-described official gazette. A first method involves providing a rectangular guide groove between an information track and another information track to reduce the thickness of a magnetic film on a side surface of the guide groove. A second method involves annealing a magnetic film of a guide groove portion between an information track and another information track by use of a high-output laser to modify the magnetic properties. A third method involves patterning by etching.

Furthermore, as a modification of the first method, a method is conceivable which involves forming a land portion and a rectangular groove portion so as to have the same width and using both of the land and the rectangular groove as information tracks (referred to as "land/groove recording"). In all of these methods, adjacent information tracks are separated from each other by methods that involve changes in physical shapes or physical properties, thereby enlarging a recording mark without increasing the domain wall area.

Incidentally, although an information can be recorded at a high density by using a magneto-optical recording medium of the domain-wall-displacement detection system, problems arise as to how to record an address information that provides a standard for a position at which writing is stared when recording an information in a magneto-optical recording medium of the domain-wall-displacement detection system or a standard for a position at which reading is started when reading an information from a magneto-optical recording medium of the domain-wall-displacement detection system.

Address information, which is an important information that supplies standards for an information reading position and an information writing position, must be capable of being read surely and accurately. For this reason, usually, in a magneto-optical recording medium, an address information is recorded by physically providing fine recesses called pits in the magneto-optical recording medium.

However, when an address information is recorded in a magneto-optical recording medium by pits, because the technique for magnetic domain enlargement cannot be applied to pit portions as described above, an address information part recorded by pits maintains the conventional recording density as it is. For this reason, even in the case of a magneto-optical recording medium capable of high-density recording of an information, the proportion of occupancy of the address information to recording data (main information) to be recorded in the magneto-optical recording medium increases relatively, thereby resulting in a factor that reduces the recording capacity of the recording data even when high-density recording is possible.

For this reason, in a magneto-optical recording medium capable of high-density recording, an important problem is in what manner an address information is recorded to enable an information to be efficiently recorded without decreasing the storage capacity and in what manner both address information and main information can be accurately read and reproduced.

As a technique for resolving the above-described problem, for example, in Japanese Patent Application Laid-Open No. 12-276809, there is disclosed a method which involves recording an additional information beforehand by forming land portions and groove portions as tracks for recording a main information in a wobbling manner according to the additional information including at least an address information. The method of this patent gazette is used in MDs or the like.

According to the above patent gazette, the wobbling frequency of tracks for recording address data is set so as to belong to a frequency band lower than the recording frequency band of main data and an address information can be detected by extracting frequency components of the wobbling frequency and frequencies in the vicinity thereof from read-out signals.

Therefore, by utilizing the wobbling shapes of lands and grooves and the domain-wall-displacement detection system, it is possible to realize a magneto-optical recording medium in which a recorded main information can be read out and in which an additional information such as an address information is efficiently recorded without decreasing the recording capacity of data that a magneto-optical recording medium capable of high-density recording originally has.

It is, therefore, an object of the present invention to provide a magneto-optical recording medium in which domain-wall-displacement without affection by a wobbling shape may be performed stably in a recording track region and which may enable recording and reproduction of an information to be performed in a stable manner, and a method of producing the magneto-optical recording medium.

The magneto-optical recording medium of the present invention is a domain-wall-displacement type magneto-optical recording medium comprising: a substrate having formed therein a groove and a land at least either of which is used as a recording track for an information, the recording track being wobbled to indicate an address information; a magnetic layer formed on the substrate; and an annealed region formed by annealing the magnetic layer between the recording tracks, wherein the annealed region is formed linearly along the wobbled recording track.

A method of producing the domain-wall-displacement type magneto-optical recording medium of the present invention comprises the steps of forming a magnetic layer on a substrate; and irradiating an area between recording tracks on the magnetic layer with a light beam of a given annealing power to form an annealed region linearly along a wobbled recording track.

A number of embodiments of the invention will now be described, by way of example only, with reference to the accompanying drawings in which:

FIG. 1 is a sectional view showing the layer constitution of a first embodiment of the magneto-optical recording medium;

FIG. 2 is a flow chart showing the production steps of the magneto-optical recording medium according to an embodiment of the present invention;

FIG. 3 is a view showing an example of an annealing device used in the production of the magneto-optical recording medium of an embodiment of the present invention;

FIG. 4 is a partially enlarged perspective view of a magneto-optical recording medium during annealing by use of the device of FIG. 3;

FIGS. 5A and 5B are views showing a magneto-optical recording medium (groove recording) when annealed to a size not less than the maximum width of a wobbled land portion;

FIGS. 6A and 6B are views showing a magneto-optical recording medium (groove recording) when annealed to a size less than the maximum width of a wobbled land portion;

FIG. 7 is a partially enlarged perspective view of a magneto-optical recording medium (land/groove recording) of a second embodiment of the present invention during annealing;

FIGS. 8A and 8B are views showing an annealed magneto-optical recording medium of the second embodiment of the present invention; and

FIGS. 9A, 9B and 9C are views explaining a conventional domain-wall-displacement reproduction system.

Next, embodiments of the present invention will be described in detail by referring to the attached drawings.

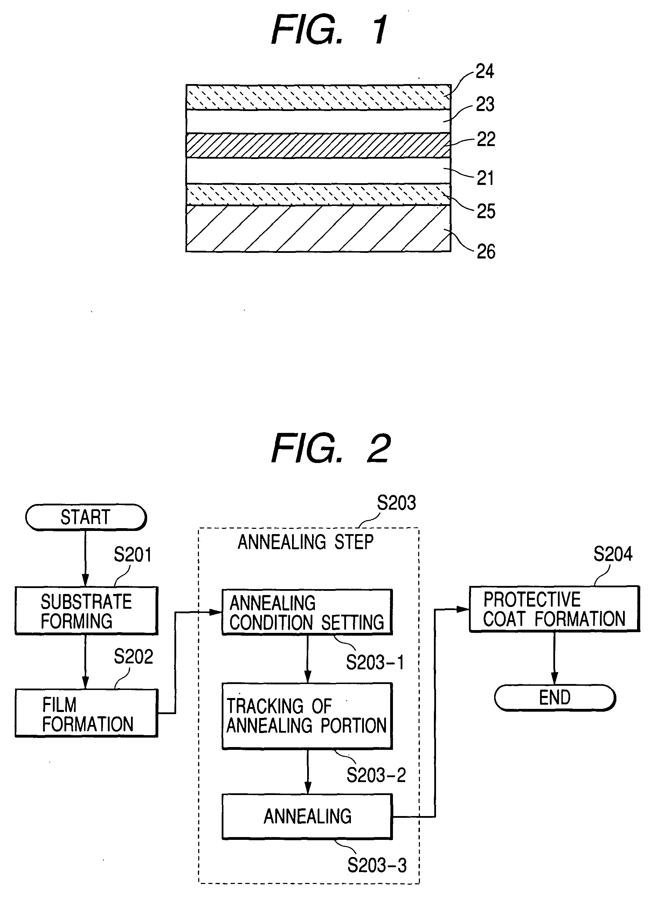

FIG. 1 is a sectional view showing the layer constitution of a first embodiment of the magneto-optical recording medium according to the present invention. In the figure, reference numeral 26 denotes a transparent substrate and on the substrate 26 are sequentially stacked at least a dielectric layer 25, a first magnetic layer 21 (a reproduction layer), a second magnetic layer 22 (an adjustment layer), a third magnetic layer 23 (a recording layer) and a dielectric layer 24.

As the substrate 26, for example, polycarbonate, acrylic resin, glass, etc. can be used. As the dielectric layer 24 and the dielectric layer 25, dielectric materials such as SiN, AiN, SiO, ZnS, MgF, TaO or the like can be used. The materials need not necessarily be light-transmissive unless domain-wall-displacement is not optically detected. The layers other than the magnetic layers are not indispensable. Further, the order of stack of the magnetic layers may be reversed.

Furthermore, the thermal characteristics may be adjusted by adding a metal layer constituted by Al, AlTa, AlTi, AlCr, Cu, Pt, Au, or the like to this constitution. Also, a protective coat comprised of a polymer resin may be added.

Each of these layers can be deposited and formed by, for example, continuous sputtering by use of a magnetron sputtering apparatus, or continuous vapor deposition, etc. In particular, the magnetic layers exchangeably couple with each other by performing continuous film formation in vacuo.

In the magneto-optical recording medium of this embodiment, when the Curie temperature of the first magnetic layer 21 is represented by Tc1, the Curie temperature of the second magnetic layer 22 is represented by Tc2 and the Curie temperature of the third magnetic layer 23 is represented by Tc3, the Curie temperatures of these magnetic layers satisfy the following conditions:

$$Tc1 > Tc2$$

$$Tc3 > Tc2.$$

As the material for the magneto-optical recording medium, various materials may be included. For example, the magneto-optical recording medium may be constituted of a rare-earth-iron amorphous alloy that is constituted by 10-50 atomic % of at least one of rare earth metal elements such as Pr, Nd, Sm, Gd, Tb, Dy and Ho, and 90-50 atomic % of at least one of iron group elements such as Fe, Co and Ni. Further, in order to improve corrosion resistance and for other purposes, elements such as Cr, Mn, Cu, Ti, Al, Si, Pt and In may be added in small amounts thereto.

Furthermore, saturation magnetization can be controlled by the compositional ratio of the rare earth elements and the iron group elements. The coercive force can be controlled by the adjustment of the saturation magnetization. However, essentially, vertical magnetic anisotropy is adjusted by selecting material elements. In general, materials including Tb-base materials, Dy-base materials or the like have large vertical magnetic anisotropy and also large coercive force, whereas Gd-base materials have small anisotropy and also small coercive force. Further, adding nonmagnetic elements decreases vertical magnetic anisotropy.

Although the Curie temperature can also be controlled by the compositional ratio, in order to control the Curie temperature independently of the saturation magnetization, a method may preferably be utilized which involves using a material in which a part of Fe is substituted with Co as iron group element and controlling the substitution amount. That is, because substitution of 1 atom % Fe with Co is expected to raise a Curie temperature by about 6°C, the addition amount of Co is adjusted using this relationship so as to attain a desired Curie temperature. Furthermore, on the contrary, it is also possible to lower a Curie temperature by adding trace amounts of nonmagnetic elements such as Cr and Ti. Alternatively, using two or more kinds of rare earth elements and adjusting the compositional ratio of the elements can also control a Curie temperature.

Here, the domain wall coercive force of the first magnetic layer 21 of the magneto-optical recording medium according to this embodiment is smaller than the domain wall coercive force of the third magnetic layer 23 at a temperature which is not less than the Curie temperature Tc2 of the second magnetic layer 22. The first magnetic layer 21, i.e., the reproduction layer enlarges a magnetic domain recorded in the recording layer by utilizing the action of the adjustment layer and a temperature gradient generated by a laser spot to effect reproduction.

Further, in a multilayer magnetic film like the magneto-optical recording medium according to this embodiment, an exchanging force acts so as to align the directions of sublattice magnetization of the same kind between adjacent magnetic layers in the same direction and the magnetic coupling between the adjacent magnetic layers is called exchangeable coupling. In this embodiment, an exchangeable coupling force works so as to act on the first magnetic layer 21 from the third magnetic layer 23 via the second magnetic layer 22, and a temperature exceeding the coercive force energy of the first magnetic layer 21 is present within the temperature range between ambient temperature and Tc2. For this reason, by passing through this temperature during the temperature rise/fall action, at ambient temperature or a temperature between ambient temperature and Tc2, it is possible to align the directions of magnetization of the first magnetic layer 21 and the second magnetic layer 22 with the direction of magnetization of the third magnetic layer 23.

Further, in order to stably hold a record information recoded as a magnetic domain, it is preferred that the third magnetic layer 23 is a vertical magnetization film with large vertical magnetic anisotropy. It is necessary that the Curie temperature Tc3 of the third magnetic layer 23 is higher than the Curie temperature Tc2 of the second magnetic layer 22. At the same time, it is preferred that the Curie temperature Tc3 of the third magnetic layer 23 is not less than 120°C but not more than 360°C in order to provide practical recording sensitivity and perform a stable reproduction operation.

FIG. 2 is a flow chart showing an embodiment of the producing process of a magneto-optical recording medium according to the present invention. In this embodiment, when a magneto-optical recording medium is to be produced, the production is performed in the order of a substrate forming step (S201), a film formation step (S202), an annealing step (S203), and a protective coat formation step (S204). In the substrate forming step, wobbling is performed to indicate an address information and there is formed a trough comprising a groove and a land at least either of which is used as a recording track for an information.

In the film formation step, the magnetic films shown in FIG. 1 are formed on the substrate 26. However, when the thermal characteristics are to be adjusted by adding a metal layer formed of Al, AlTa, AlTi, AlCr, Cu, Pt, Au, etc., the film formation may be performed after the annealing step.

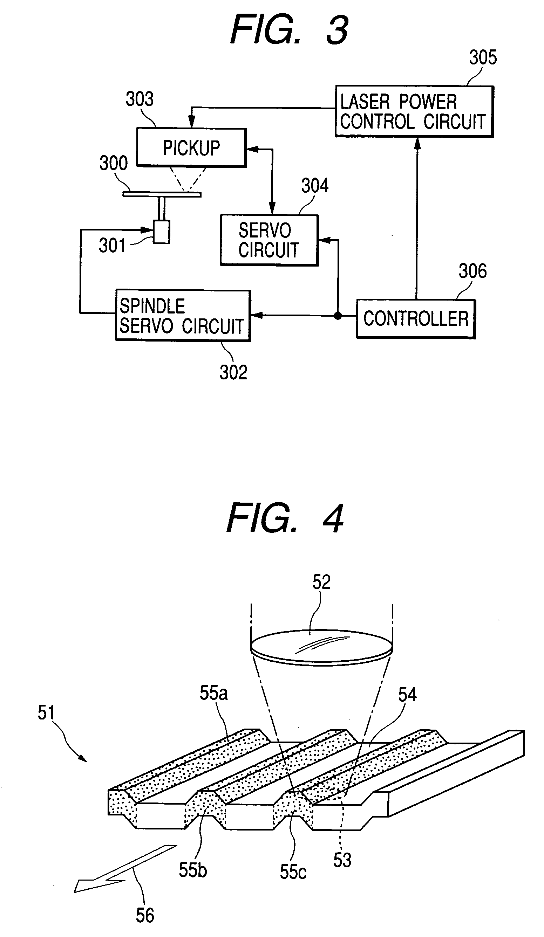

Next, the annealing process will be described in detail. FIG. 3 is a view showing the constitution of an annealing device of a magneto-optical recording medium 300 used in this embodiment. The annealing device is constituted by a spindle motor 301, a spindle servo circuit 302, a pickup 303, a servo circuit 304, a laser power control circuit 305 and a controller 306.

The spindle motor 301 drives the magneto-optical recording medium, and the spindle servo circuit 302 controls the spindle motor 301 so that the magneto-optical recording medium maintains a specified linear velocity. It is assumed that the magneto-optical recording medium rotates in the direction indicated by an arrow 56 in FIG. 4.

For the pickup 303, various types of control including a focus servo, a tracking servo or displacement control in the radial direction are performed by the servo circuit 304, and a laser beam emitted from the pickup 303 is controlled by the laser power control circuit 305 so as to become a prescribed annealing power.

The controller 306 is a microcomputer equipped with a CPU, a ROM, a RAM, etc. and controls each part of the annealing device. The CPU recognizes the position on the scanned magneto-optical recording medium by reproduction address data, produces control signals to be supplied to the servo circuit 304, the spindle servo circuit 302, etc. so as to scan an objective track on the magneto-optical recording medium on the basis of the reproduction address data, and supplies the control signals to the respective parts.

To the servo circuit 304 are supplied focus error signals, tracking error signals, etc. from the pickup 303. At the same time, for example, an information that indicates positions on the magneto-optical recording medium is supplied from the controller 306. Furthermore, an information from the pickup 303 and control signals from the controller 306 are supplied also to the spindle servo circuit 302 and the laser power control circuit 305 so that desired control is performed.

For tracking control, in particular, the pickup 303 is provided with a photodetector (not shown) that receives the reflected light of the laser beam irradiated to the magneto-optical recording medium, and forms a push-pull signal based on the amount of the reflected light received by each divided detector of the photodetector. The push-pull signal is supplied to the servo circuit 304, and the servo circuit 304 performs tracking control on the basis of the control signals from the controller 306 so that the laser beam from the pickup 303 scan an objective track.

Next, a method of performing annealing by use of the annealing device of FIG. 4 will be described. First, the controller 306 performs control so that a radially innermost or outermost part of the magneto-optical recording medium is irradiated with a laser spot. The magneto-optical recording medium is controlled by the spindle servo circuit 302 so as to maintain a liner velocity for annealing and a laser beam emitted from the pickup 303 is controlled by the laser power control circuit 305 so as to become a prescribed annealing power. Various annealing conditions are set by the above operations (S203-1 in FIG. 2).

Next, the servo circuit 304 detects focus error signals and tracking error signals by use of a mechanism not shown in the figure and performs control so that the center of a track to be annealed is scanned (S203-2). Annealing is performed by emitting the laser beam of the prescribed annealing power from the pickup 303 onto the magneto-optical recording medium such that the radially innermost part of the magneto-optical recording medium is irradiated first and the laser beam moves in a direction toward the radially outermost part of the magneto-optical recording medium while performing the tracking control in the above-mentioned manner (S203-3).

FIG. 4 is a partially enlarged perspective view of the magneto-optical recording medium during the annealing. The magneto-optical recording medium shown in FIG. 4 is described in terms of the groove recording type in which main data is recorded in a groove portion, i.e., a groove track. Further, this magneto-optical recording medium is fabricated from a spiral type substrate and a groove portion 54 and a land portion 55 are formed by spirally forming a trough (i.e., groove) in the magneto-optical recording medium. The land portion is a protrusion formed between adjacent grooves. Further, as described above, it is assumed that address data has been recorded beforehand by the wobbling of the groove track.

When performing annealing, a laser spot 53 is focused on the magnetic layer of the magneto-optical recording medium by use of an objective lens 52 as shown in FIG. 4, land portions 55a, 55b, 55c of the magneto-optical recording medium are scanned in the mentioned order, and annealing is continuously performed from the radially innermost part to the radially outermost part at a constant power. After the annealing has been completed, a protective coat is formed on the medium (S204) to complete the production of the magneto-optical recording medium. Incidentally, in a case where annealing is performed by emitting a laser beam from the substrate side, a protective coat may be formed prior to the annealing step.

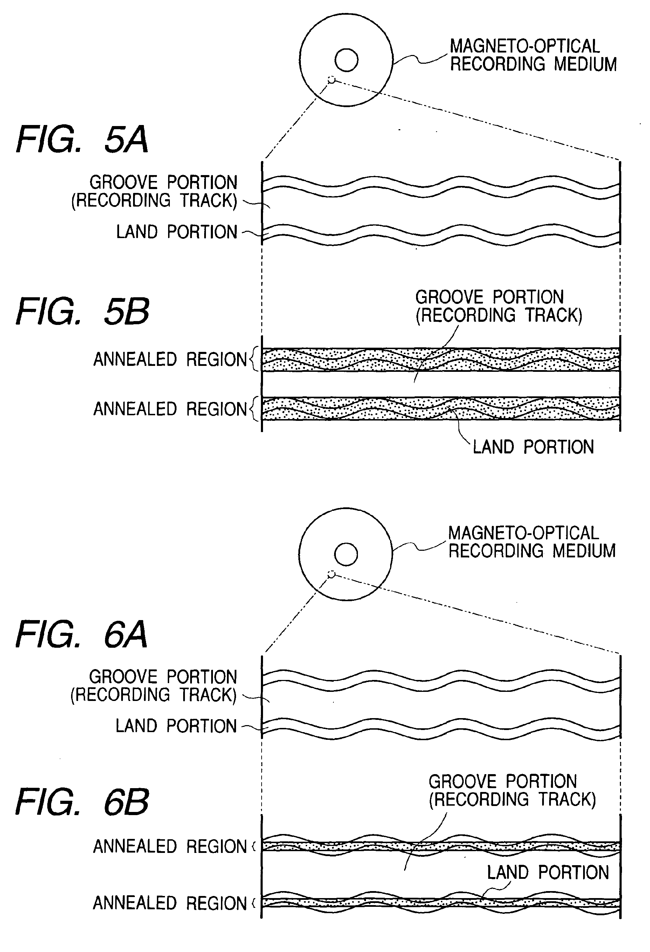

FIGS. 5A and 5B are partially enlarged views illustrating a magneto-optical recording medium that is annealed by the method according to this embodiment. FIG. 5A shows an unannealed medium before annealing, and a groove portion used as a recording track is wobbled.

FIG. 5B shows the medium that has been annealed by the method according to this embodiment. Unlike the case shown in FIGS. 6A and 6B, an annealed region is formed with a width not less than the width of the wobbling (or skewing or meandering) of the land portion and the annealed region is formed linearly along the recording track. In this regard, the expression "the annealed region is formed linearly" as herein employed is intended to mean that the annealed region is not meandered unlike the recording track and is formed substantially linearly. In the case of this type of annealing, stable domain-wall-displacement without affection by the wobbling shape can be performed in the recording track region and it advantageously becomes possible to perform stable recording/ reproduction of information. Incidentally, the width of the annealed region can be adjusted by varying the magnitude of the annealing power.

FIG. 6A shows an unannealed recording track before annealing, and FIG. 6B shows a recording track and an annealed region after annealing. Incidentally, FIGS. 6A and 6B illustrate an example in which a groove portion is used as a recording track.

Here, the signal band used for the tracking servo, unlike the signal band of the wobbling data, is of a low-frequency zone, so that the annealed region is formed linearly as shown in FIG. 6B without following the wobbling. Therefore, because an annealed region and a non-annealed region will be formed in the wobbled land portion, the recording track will not be linearly formed with respect to the annealed region and will be wobbled. For this reason, the enlargement of magnetic domains reflects the skewing as described above, with the result that the action of domain-wall-displacement may become unstable. Therefore, the annealing of the type shown in FIGS. 5A and 5B is preferable.

Incidentally, the present invention is not limited to a magneto-optical recording medium for the groove recording and can also be applied to a magneto-optical recording medium for the land recording by use of similar annealing process. In this case, the land portion is used as a recording track and an annealed region is formed with a width not less than the skewing width of the wobbling of the groove portion.

Furthermore, by annealing a sidewall at a boundary between a land and a groove, the present invention can also be used in a magneto-optical recording medium for the land/groove recording in which both a land and a groove are used as recording tracks. A medium when used in this land/groove recording will be described below as a second embodiment.

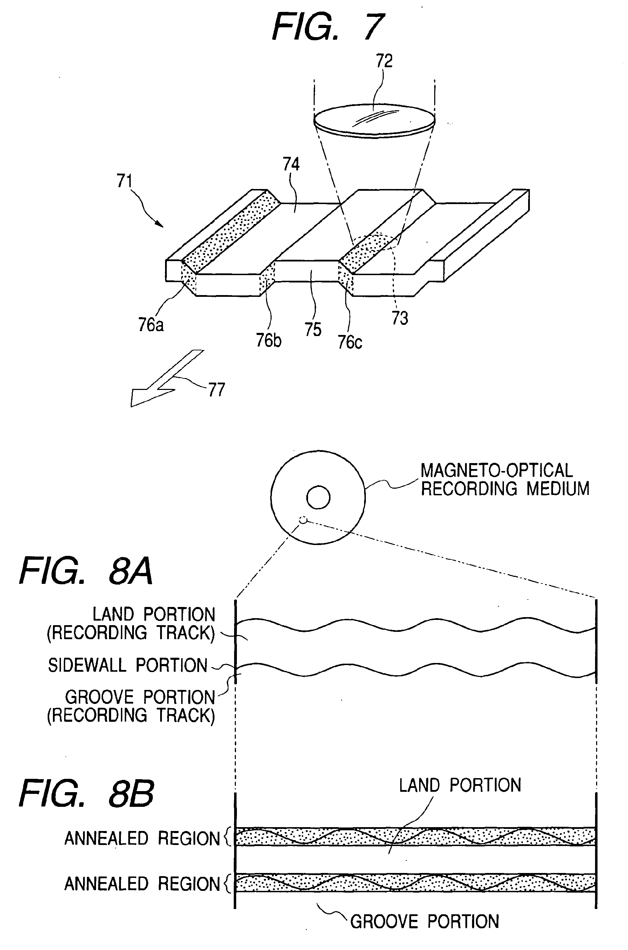

FIG. 7 is a partially enlarged perspective view of a magneto-optical recording medium for land/groove recording during annealing. By forming a groove spirally, a groove portion 74 and a land portion 75 are formed in the magneto-optical recording medium, and both the groove portion and the land portion can be used as recording tracks. Address data has been recorded beforehand by the wobbling of the land and groove tracks. Incidentally, the layer constitution of the magneto-optical recording medium is the same as shown in FIG. 1.

The production of the magneto-optical recording medium of this embodiment is performed by the steps shown in FIG. 2 and the annealing is performed by use of the annealing device shown in FIG. 4. In the annealing, a laser spot 73 is focused on the magnetic layer of the magneto-optical recording medium by use of an objective lens 72 as shown in FIG. 7. In this case, a sidewall portion at a boundary between a land and a groove is irradiated with the laser spot by use of a mechanism not shown in the figure and sidewall parts 76a, 76b, 76c of the magneto-optical recording medium are scanned in the mentioned order, and the annealing is continuously performed from the radially innermost part to the radially outermost part at a constant power.

FIGS. 8A and 8B are partially enlarged views illustrating a magneto-optical recording medium that is annealed by the method according to this embodiment for land/groove recording. FIG. 8A shows an unannealed medium before annealing, and the land and groove portions used as recording tracks are wobbled as shown in FIGS. 8A and 8B.

FIG. 8B shows a recording track and an annealed region after the annealing and the annealed region is formed in the sidewall portion at a boundary between the land and the groove. As shown in FIG. 8B, the annealed region is formed linearly with respect to the recording tracks of the land and groove and the width of the annealed region is not less than the skewing width of the wobbling at the sidewall portion at a boundary between the land and groove.

Therefore, stable domain-wall-displacement not affected by the wobbling shape can be performed in the land and groove and it becomes possible to perform stable recording/reproduction of information. After the annealing step, a protective coat is formed on the magneto-optical recording medium as described above. However, in a case where annealing is performed by emitting a laser beam from the substrate side, a protective coat may be formed before the annealing step.

**Claims**

1. A domain-wall-displacement type magneto-optical recording medium comprising:

   a substrate having formed therein a groove and a land at least either of which is used as a recording track for an information, the recording track being wobbled to indicate an address information;
   a magnetic layer formed on the substrate; and
   an annealed region formed by annealing the magnetic layer between the recording tracks,

   wherein the annealed region is formed linearly along the wobbled recording track.

2. The domain-wall-displacement type magneto-optical recording medium according to claim 1, wherein either one of the groove or the land is used as a recording track and the width of the annealed region is not less than the width of the wobbling of the land or groove between the recording tracks.

3. The domain-wall-displacement type magneto-optical recording medium according to claim 1, wherein both the groove and the land are used as the recording tracks; the annealed region is formed on a sidewall portion at a boundary of the land and groove between the recording tracks; and the width of the annealed region is not less than a maximum of the width of the wobbling on the sidewall portion at the boundary of the land and groove.

4. The domain-wall-displacement type magneto-optical recording medium according to claim 1, which comprises a first magnetic layer a domain wall of which is displaceable, a third magnetic layer that holds a recording magnetic domain and has a domain wall coercive force greater than that of the first magnetic layer, and a second magnetic layer that has a Curie temperature lower than those of the first and the third magnetic layers and is disposed between the first and the third magnetic layers.

5. A method of producing the domain-wall-displacement type magneto-optical recording medium as set forth in claim 1, comprising the steps of:

forming a magnetic layer on a substrate; and irradiating an area between recording tracks on the magnetic layer with a light beam of a given annealing power to form an annealed region linearly along a wobbled recording track.

# FIG. 1

# FIG. 2

# FIG. 3

305 LASER POWER CONTROL CIRCUIT

303 PICKUP

300

301

304 SERVO CIRCUIT

306 CONTROLLER

302 SPINDLE SERVO CIRCUIT

# FIG. 4

52

51

55a

54

55b

55c

53

56

FIG. 5A

MAGNETO-OPTICAL RECORDING MEDIUM

GROOVE PORTION (RECORDING TRACK)

LAND PORTION

FIG. 5B

GROOVE PORTION (RECORDING TRACK)

ANNEALED REGION

ANNEALED REGION

LAND PORTION

FIG. 6A

MAGNETO-OPTICAL RECORDING MEDIUM

GROOVE PORTION (RECORDING TRACK)

LAND PORTION

FIG. 6B

GROOVE PORTION (RECORDING TRACK)

ANNEALED REGION

LAND PORTION

ANNEALED REGION

# FIG. 7

# FIG. 8A

MAGNETO-OPTICAL
RECORDING MEDIUM

LAND PORTION
(RECORDING TRACK)

SIDEWALL PORTION

GROOVE PORTION
(RECORDING TRACK)

# FIG. 8B

ANNEALED REGION {

LAND PORTION

ANNEALED REGION {

GROOVE PORTION

## FIG. 9A

## FIG. 9B

## FIG. 9C